# FASCICULE DE BREVET EUROPEEN

(11) **EP 3 682 139 B1**
(45) Date de publication et mention de la délivrance du brevet: **26.10.2022**
(21) Numéro de dépôt: 18782114.5
(22) Date de dépôt: 12.09.2018
(51) Int. Cl.: F16H 1/28

(54) **PIVOT POUR PALIER LISSE**
DREHZAPFEN FÜR EIN GLEITLAGER
PIVOT FOR A SLIDING BEARING

(30) Priorité: 12.09.2017 FR 1758423
(43) Date de publication de la demande: 22.07.2020
(73) Titulaire: Safran Transmission Systems, 92700 Colombes (FR)
(72) Inventeur: DOMBEK, Alexis, Claude, Michel, 77550 Moissy-Cramayel (FR); LEMOINE, Julie, Marie, Renée, 77550 Moissy-Cramayel (FR)
(74) Mandataire: Ernest Gutmann - Yves Plasseraud S.A.S.
(86) Numéro de dépôt international: PCT/FR2018/052233
(87) Numéro de publication internationale: WO 2019/053371

(56) Documents cités:
- EP-A1- 2 607 695
- EP-A1- 3 029 358
- EP-A2- 1 837 542
- EP-A2- 2 270 361

## Description

### DOMAINE

La présente invention concerne un pivot pour palier lisse et plus particulièrement un pivot destiné à être intégré dans un train d'engrenages épicycloïdal d'une turbomachine telle qu'un turboréacteur ou un turbopropulseur.

### CONTEXTE

Classiquement un train d'engrenages épicycloïdal comprend des pignons satellites en prise avec une couronne externe et un pignon central. Les pignons satellites sont portés par un porte-satellite et montés libre en rotation sur des pivots. Un tel train d'engrenages épicycloïdal peut servir notamment à la transmission de puissance d'un arbre moteur tel que l'arbre d'un compresseur basse pression relié au pignon central, à une roue de soufflante reliée au porte-satellites.

Chaque pivot est formé par une paroi annulaire délimitant un passage axial et comprenant une première et une seconde rainures annulaires débouchant axialement dans des sens opposés. Chaque rainure est délimitée par deux branches annulaires coaxiales interne et externe formées aux extrémités axiales de la paroi annulaire. Les branches interne et externe de chaque rainure confère une souplesse aux extrémités axiales du pivot limitant ainsi la déformation du pivot et assurant ainsi un bon alignement radial des dentures des pignons satellites avec le pignon central et la couronne externe. Toutefois, on constate que ce type de pivot n'est pas encore optimal puisqu'il contribue de manière non négligeable à la masse total du train épicycloïdal.

Les documents EP3029358, EP2607695, EP2270361 et EP1837542 décrivent des systèmes d'engrenages épicycloïdaux.

### RESUME DE L'INVENTION

La présente invention concerne tout d'abord un pivot pour palier lisse de train épicycloïdal, comprenant une paroi annulaire délimitant un passage axial et comprenant une première et une seconde rainures annulaires débouchant axialement dans des sens opposés et chacune délimitée par deux branches annulaires coaxiales interne et externe formées aux extrémités axiales de la paroi annulaire, caractérisé en ce que des évidements sont réalisés dans au moins une paroi de fond de l'une des rainures annulaires.

Les évidements sont réalisés dans une zone massive du pivot, ce qui permet de réduire la masse du pivot. De plus, cette zone présente l'avantage d'être sujette à peu de contraintes mécaniques en fonctionnement. Ces évidements peuvent être réalisés par perçage sur un pivot existant conforme à la technique antérieure, ce qui s'avère simple et rapide à réaliser.

Les évidements sont par exemple répartis autour du passage axial. Ils peuvent l'être de manière régulière autour dudit passage axial.

Selon une autre caractéristique de l'invention, les évidements sont des orifices débouchant à une première extrémité dans la première rainure annulaire et à une seconde extrémité opposée dans la seconde rainure annulaire.

Les orifices peuvent être régulièrement répartis autour du passage axial. Ils peuvent aussi être répartis de manière uniforme sur un secteur angulaire donné autour du passage axial, la zone angulaire dépourvue d'orifices tels que précités pouvant alors loger un ou des conduits de passage d'huile de lubrification s'étendant depuis le passage axial jusqu'à une surface externe du pivot.

Les orifices peuvent être sensiblement rectilignes et leurs axes peuvent avantageusement être inclinés par rapport à l'axe du passage axial, de préférence d'un angle compris entre 0° et 30°. Cette dernière configuration permet de réduire la masse tout en conservant une bonne rigidité mécanique au pivot.

L'invention concerne également un train épicycloïdal d'une turbomachine à gaz pour aéronef, comprenant une couronne extérieure et des pignons satellites en prise avec le pignon central et avec la couronne extérieure et montés chacun libre en rotation sur un porte-satellites, les pignons satellites pouvant chacun tourner autour d'un axe de satellite par l'intermédiaire d'un pivot tel que décrit précédemment.

Egalement, l'invention concerne une turbomachine à gaz pour aéronef comprenant un train d'engrenages dont le pignon central entoure et est solidaire en rotation d'un arbre du compresseur de la turbomachine. Plus spécifiquement, la couronne extérieure peut être solidaire d'un carter ou virole annulaire statique du compresseur basse pression. Dans cette configuration, le train d'engrenages épicycloïdal forme un réducteur puisque la vitesse de rotation du porte-satellites est inférieure à celle du pignon central.

Bien évidemment, l'invention est également applicable à des trains d'engrenages épicycloïdaux tels que par exemple des trains d'engrenages épicycloïdaux dans lesquels la couronne extérieure est également mobile en rotation.

L'invention est en outre applicable à un train d'engrenage épicycloïdal dans lequel le porte-satellites est fixe et la couronne extérieure est mobile. Ce type de montage est également appelé train réducteur planétaire.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en coupe d'un train d'engrenages épicycloïdal destiné à être utilisé dans une turbomachine selon la figure 1 ;
- la figure 3 est une vue schématique en coupe d'un pignon satellite et du porte satellites de la figure 2 ;
- la figure 4 est une vue schématique en coupe d'un pivot autour duquel tourne un pignon satellite ;
- les figures 5A, 5B, 5C, 5C et 5D sont des vues schématiques d'un premier mode de réalisation de l'invention ;
- la figure 6 est une vue schématique axiale d'un pivot selon un second mode de réalisation de l'invention ;
- la figure 7 est une vue schématique de côté du pivot de la figure 6.

### DESCRIPTION DETAILLEE

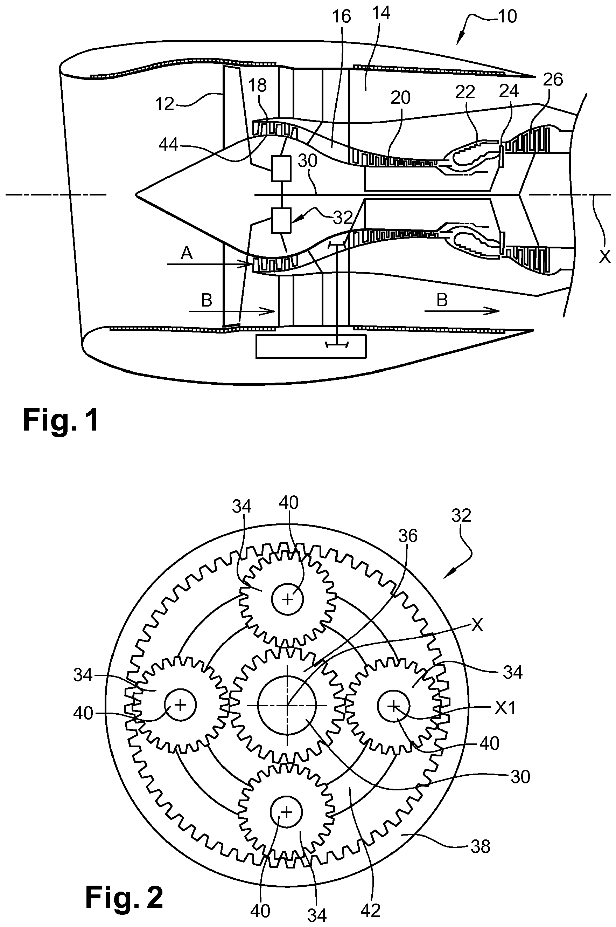

On se réfère tout d'abord à la figure 1 qui représente une vue schématique d'une turbomachine 10 selon la technique connue comprenant d'amont en aval une roue de soufflante 12 dont la rotation induit une accélération d'air dans une veine annulaire d'air secondaire 14 (flux d'air B) entourant successivement une veine annulaire d'air primaire 16 (flux d'air A) s'écoulant dans un compresseur basse pression 18, un compresseur haute pression 20, une chambre annulaire de combustion 22, une turbine haute pression 24 et une turbine basse pression 26. Classiquement, la turbine basse pression 26 entraine en rotation le rotor 30 du compresseur basse pression lequel est relié à la roue de soufflante 12. Toutefois, pour limiter la vitesse de rotation de la roue de soufflante 12 relativement à la vitesse de rotation du rotor 30 du compresseur basse pression 18, il est connu de monter un train d'engrenages épicycloïdal 32 radialement à l'intérieur du compresseur basse pression 18, ce train d'engrenages épicycloïdal 32 étant alors qualifié de réducteur du fait de sa fonction de réduction de la vitesse de rotation.

Un tel train d'engrenages comprend des pignons satellites 34 en prise avec un planétaire interne 36 ou pignon central et avec un planétaire externe 38 ou couronne extérieure, les planétaires interne 36 et externe 38 étant en coaxiaux à l'axe X de la turbomachine. Chaque pignon satellite 34 est monté libre en rotation autour d'un pivot 40 et les pivots 40 sont solidaires d'un porte-satellites 42. Dans un réducteur épicycloïdal, le pignon central 36 est solidaire en rotation de l'arbre 30 du compresseur basse pression 18 qui forme une entrée du train d'engrenages, le porte satellites 42 solidaire de la roue de soufflante 12 forme une sortie de réduction de la vitesse du train d'engrenages épicycloïdal et la couronne extérieure 38 est rendue solidaire d'un carter 44 de la turbomachine délimitant intérieurement une zone annulaire dans laquelle est montée le train d'engrenages.

L'invention qui sera décrite ultérieurement s'applique ainsi non seulement à un train d'engrenages 32 du type réducteur mais également à une train d'engrenages dans lequel la couronne extérieure 38 est reliée en rotation à une seconde roue de soufflante, la couronne extérieure 38 et le porte satellites étant configurés/dimensionnés pour tourner dans des sens opposés.

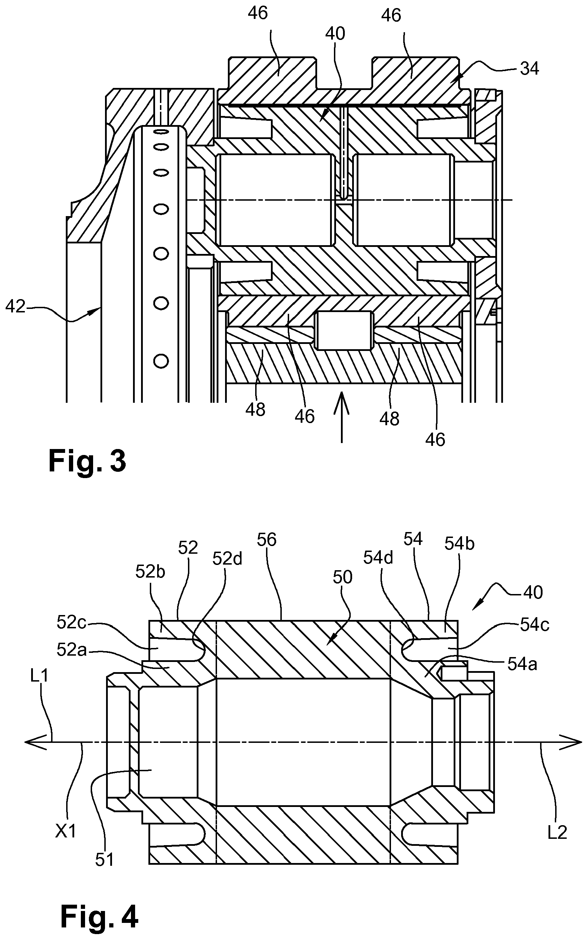

La figure 3 représente une vue en coupe d'un pivot 40 autour duquel est engagé un pignon satellite 34 de manière à former un palier lisse, les dentures périphériques 46 du pignon satellite 34 étant représentées en prise avec les dentures périphériques 48 du pignon central 36 mais pas avec la couronne extérieure qui n'est pas représentée sur cette figure.

Comme cela est bien visible sur cette figure et plus spécifiquement sur la figure 4, le pivot 40 comprend une paroi annulaire 50 qui délimite radialement vers l'intérieur un passage axial 51 s'étendant selon l'axe X1 du pivot. Cette paroi annulaire 50 comprend une première partie annulaire 52 d'extrémité et une seconde partie annulaire 54 d'extrémité opposée à la première partie 52. La première partie annulaire 52 et la seconde partie annulaire 54 sont séparées par une partie annulaire intermédiaire 56 ou intercalaire. La première partie annulaire 52 comprend deux branches annulaires radialement interne 52a et externe 52b coaxiales délimitant une première rainure 52c ou gorge annulaire débouchant dans un premier sens L1 de la direction axiale X1. De même la seconde partie annulaire 54 comprend deux branches annulaires radialement interne 54a et externe 54b coaxiales délimitant une seconde rainure 54c ou gorge annulaire débouchant dans un second sens L2 de la direction axiale X1. Sur la figure 4, la branche radialement interne 52a de la première partie annulaire 52 et la branche radialement interne 54a de la seconde partie annulaire 54 s'étendent axialement sur une distance supérieure, respectivement, à la branche radialement externe 52b de la première partie annulaire 52 et à la branche radialement externe 54b de la seconde partie annulaire 54. Les branches radialement interne 52a, 54a et externe 52b, 54b de chacune des première partie annulaire 52 et seconde partie annulaire 54 apportent une souplesse au pivot en fonctionnement. Toutefois, on a remarqué que la masse du pivot 40 était encore trop importante et que l'on a ainsi cherché à la diminuer.

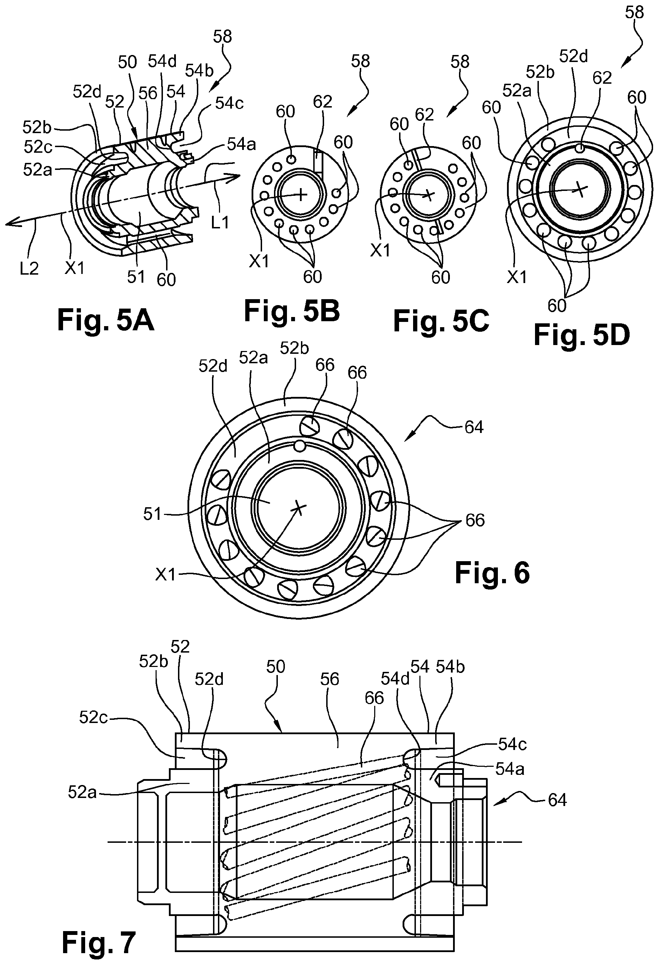

A cette fin, on propose, dans une première réalisation d'un pivot 58, de réaliser des évidements 60 de matière dans la partie annulaire intermédiaire 56 qui correspond à la partie la plus massive du pivot 58. Ces évidements 60 sont, dans les différentes réalisations, des orifices réalisés, par exemple par perçage, au travers de la paroi de fond 52d des première et seconde rainures 52, 54. Chaque orifice 60 est ainsi débouchant à une première extrémité dans la première rainure 52c et à une seconde extrémité dans la seconde rainure 54c. Dans cette réalisation, les orifices 60 sont sensiblement rectilignes et sensiblement parallèles à l'axe X1 du passage axial. Comme cela est visible sur les figures 5B à 5D, les orifices 60 sont avantageusement régulièrement répartis sur un secteur angulaire inférieur à 360° afin d'éviter que les perçages 60 ne traversent des conduites 62 de circulation de d'huile servant notamment à la lubrification du palier lisse précédemment décrit.

Dans une autre réalisation de l'invention représentée en figure 6 et mieux visible en figure 7, le pivot 64 les orifices 66 sont ici inclinés par rapport à l'axe X1 du passage axial d'un angle compris entre 0° et 30°

Dans d'autres réalisations non représentées, le pivot pourrait comprendre des évidements de matière ayant la forme d'orifices tels que des trous borgnes qui s'avèrent toutefois plus difficile et couteux à réaliser. Des premiers trous pourraient être formés par exemple dans la paroi de fond de la première rainure et s'étendre axialement ou être inclinés comme dans la seconde réalisation représentée aux figures 6 et 7. Des seconds trous pourraient être formés dans la paroi de fond de la seconde rainure et s'étendre axialement ou être inclinés comme dans la seconde réalisation représentée aux figures 6 et 7. Les premiers et seconds trous peuvent également être agencés en alternance circonférentiellement autour de l'axe du pivot.

## Revendications

1. Pivot (58, 64) pour palier lisse d'un train épicycloïdal (32), comprenant une paroi annulaire (50) délimitant un passage axial (51) et comprenant une première (52c) et une seconde (54c) rainures annulaires débouchant axialement dans des sens opposés (L1, L2) et chacune délimitée par deux branches annulaires coaxiales interne (52a, 54a) et externe (52b, 54b) formées aux extrémités axiales de la paroi annulaire (50), **caractérisé en ce que** des évidements (60, 66) sont réalisés dans au moins une paroi de fond (52d, 54d) de l'une des rainures annulaires (52c, 54c).

2. Pivot (58, 64) selon la revendication 1, dans lequel les évidements (60, 66) sont répartis autour du passage axial (51).

3. Pivot (58, 64) selon la revendication 2, dans lequel les évidements (60, 66) sont régulièrement répartis autour du passage axial (51).

4. Pivot (58, 64) selon l'une des revendications 1 à 3, dans lequel les évidements (60, 66) sont des orifices débouchant à une première extrémité dans la première rainure annulaire (52c) et à une seconde extrémité opposée dans la seconde rainure annulaire (54c).

5. Pivot (58, 64) selon la revendication 2, dans lequel les orifices (60, 66) sont sensiblement rectilignes.

6. Pivot (64) selon la revendication 5, dans lequel les orifices (66) sont inclinés par rapport à un axe (X1) du passage axial (51), de préférence d'un angle compris entre 0° et 30°.

7. Train épicycloïdal (32) d'une turbomachine à gaz pour aéronef, comprenant une couronne extérieure (38) et des pignons satellites (34) en prise avec un pignon central (36) et avec la couronne extérieure (38) et montés chacun libre en rotation sur un porte-satellites (42), les pignons satellites (34) pouvant chacun tourner autour d'un axe (X1) de satellite par l'intermédiaire du pivot (58, 64) selon l'une quelconque des revendications 1 à 6.

8. Turbomachine à gaz pour aéronef comprenant un train épicycloïdal (32) selon la revendication 7 dont le pignon central (36) entoure et est solidaire en rotation d'un arbre (30) d'un compresseur (18) de la turbomachine.

9. Turbomachine selon la revendication 8, dans laquelle la couronne extérieure (38) est solidaire d'un carter (44) ou d'une virole annulaire statique du compresseur (18).

10. Turbomachine selon la revendication 9, dans laquelle le compresseur (18) est un compresseur basse pression.

## Patentansprüche

1. Drehzapfen (58, 64) für ein Gleitlager eines Planetengetriebes (32), enthaltend eine ringförmige Wand (50), die einen axialen Durchgang (51) begrenzt und eine erste (52c) und eine zweite (54c) Ringnut aufweist, die axial in entgegengesetzten Richtungen (L1, L2) münden und jeweils von einem ringförmigen inneren Schenkel (52a, 54a) und einem ringförmigen äußeren Schenkel (52b, 54b) begrenzt sind, die koaxial verlaufen und an den axialen Enden der ringförmigen Wand (50) ausgebildet sind,
**dadurch gekennzeichnet, dass** in zumindest einer Bodenwand (52d, 54d) einer der Ringnuten (52c, 54c) Ausnehmungen (60, 66) ausgebildet sind.

2. Drehzapfen (58, 64) nach Anspruch 1,
wobei die Ausnehmungen (60, 66) um den axialen Durchgang (51) herum verteilt sind.

3. Drehzapfen (58, 64) nach Anspruch 2,
wobei die Ausnehmungen (60, 66) gleichmäßig um den axialen Durchgang (51) herum verteilt sind.

4. Drehzapfen (58, 64) nach einem der Ansprüche 1 bis 3,
wobei die Ausnehmungen (60, 66) Öffnungen sind, die an einem ersten Ende in die erste Ringnut (52c) und an einem gegenüberliegenden zweiten Ende in die zweite Ringnut (54c) münden.

5. Drehzapfen (58, 64) nach Anspruch 2,
wobei die Öffnungen (60, 66) im Wesentlichen geradlinig verlaufen.

6. Drehzapfen (64) nach Anspruch 5,
wobei die Öffnungen (66) in Bezug auf eine Achse (X1) des axialen Durchgangs (51) geneigt sind, vorzugsweise um einen Winkel zwischen 0° und 30°.

7. Planetengetriebe (32) eines Gasturbinentriebwerks für Luftfahrzeuge, enthaltend ein äußeres Hohlrad (38) und Planetenräder (34), die mit einem Sonnenrad (36) und mit dem äußeren Hohlrad (38) in Eingriff stehen und jeweils frei drehbar an einem Planetenträger (42) gelagert sind, wobei die Planetenräder (34) jeweils über einen Drehzapfen (58, 64) nach einem der Ansprüche 1 bis 6 um eine Planetenachse (X1) drehbar sind.

8. Gasturbinentriebwerk für Luftfahrzeuge mit einem Planetengetriebe (32) nach Anspruch 7, dessen Sonnenrad (36) eine Welle (30) eines Verdichters (18) des Triebwerks umgibt und drehfest mit dieser verbunden ist.

9. Triebwerk nach Anspruch 8,
wobei das äußere Hohlrad (38) fest mit einem Gehäuse (44) oder einem statischen Mantelring des Verdichters (18) verbunden ist.

10. Triebwerk nach Anspruch 9,
wobei es sich bei dem Verdichter (18) um einen Niederdruckverdichter handelt.

## Claims

1. A pivot (58, 64) for a sliding bearing of an epicyclic train (32), comprising an annular wall (50) defining an axial passage (51) and comprising a first (52c) and a second (54c) annular groove opening axially in opposite directions (L1, L2) and each defined by two coaxial inner (52a, 54a) and outer (52b, 54b) annular branches formed at the axial ends of the annular wall (50), **characterized in that** recesses (60, 66) are formed in at least one bottom wall (52d, 54d) of one of the annular grooves (52c, 54c).

2. A pivot (58, 64) according to claim 1, wherein the recesses (60, 66) are distributed around the axial passage (51).

3. A pivot (58, 64) according to claim 2, wherein the recesses (60, 66) are regularly distributed around the axial passage (51).

4. A pivot (58, 64) according to claims 1 to 3, wherein the recesses (60, 66) are holes opening at a first end into the first annular groove (52c) and at a second opposite end into the second annular groove (54c).

5. A pivot (58, 64) according to claim2, wherein the recesses (60, 66) are substantially straight.

6. The pivot (64) according to claim 5, wherein the recesses (66) are inclined relative to the axis (X1) of the axial passage (51) preferably by an angle between 0° and 30°.

7. An epicyclic gear train (32) of an aircraft gas turbine engine, comprising an outer ring gear (38) and planetary pinions (34) meshing with a central pinion (36) and with the outer ring gear (38) and each mounted for free rotation on a planetary carrier (42), the planetary pinions (34) being able to rotate about a planet axis (X1) via one said pivot (58, 64) according to any claims 1 to 6.

8. A gas turbine engine for aircraft comprising an epicyclic gear train (32) according to claim 7 the central pinion (36) of which surrounds and is rotationally integral with a shaft (30) of a compressor (18) of the turbine engine.

9. A turbine engine according to claim 8, wherein the outer ring gear (38) is integral with a casing (44) or static annular shroud of compressor (18).

10. A turbine engine according to claim 9, wherein the compressor (18) is a low-pressure compressor.
